# EUROPÄISCHE PATENTSCHRIFT

(11) **EP 2 300 698 B1**
(45) Veröffentlichungstag und Bekanntmachung des Hinweises auf die Patenterteilung: **04.01.2012**
(21) Anmeldenummer: 09776774.3
(22) Anmeldetag: 18.06.2009
(51) Int. Cl.: F01N 9/00, F01N 3/20, B01D 53/90

(54) **REDUKTIONSMITTELTANK ZUM BEREITSTELLEN VON REDUKTIONSMITTEL AN EINER ABGASANLAGE MIT EINEM ABSPERRVENTIL**
REDUCING AGENT TANK FOR PROVIDING REDUCING AGENT TO AN EXHAUST GAS SYSTEM HAVING A CHECK VALVE
RÉSERVOIR D'AGENT DE RÉDUCTION DOTÉ D'UNE SOUPAPE D'ARRÊT POUR ALIMENTER UN SYSTÈME D'ÉCHAPPEMENT EN AGENT DE RÉDUCTION

(30) Priorität: 23.07.2008 DE 102008034223
(43) Veröffentlichungstag der Anmeldung: 30.03.2011
(73) Patentinhaber: Bayerische Motoren Werke Aktiengesellschaft, 80809 München (DE)
(72) Erfinder: BAUMEISTER, Thomas, 80999 München (DE)
(86) Internationale Anmeldenummer: PCT/EP2009/004415
(87) Internationale Veröffentlichungsnummer: WO 2010/009790

(56) Entgegenhaltungen:
- EP-A- 0 928 884
- EP-A- 1 388 648
- DE-A1-102006 061 732

## Beschreibung

Die Erfindung betrifft einen Reduktionsmittel-Tank zum Bereitstellen von Reduktionsmittel an einer Abgasanlage mit einem ersten Behälter zum Speichern von Reduktionsmittel, einem zweiten Behälter zum Speichern von Reduktionsmittel, einer Leitung zum Umströmen von Reduktionsmittel vom zweiten Behälter in den ersten Behälter und einem Absperrventil zum wahlweisen fluiddichten Verschließen der Leitung. Ferner betrifft die Erfindung ein Verfahren zum Bereitstellen von Reduktionsmittel an einer Abgasanlage mit den Schritten: Speichern von Reduktionsmittel in einem ersten Behälter, Speichern von Reduktionsmittel in einem zweiten Behälter, Umströmen von Reduktionsmittel vom zweiten Behälter in den ersten Behälter mittels einer Leitung und Absperren der Leitung mittels eines Absperrventils. Zum Stand der Technik wird auf die EP 0 928 884 A2 verwiesen.

Bei modernen Verbrennungskraft-Maschinen, die insbesondere mit Diesel betrieben werden, wird mittels einer katalytischen Reduktion ein Anteil an Stickoxiden im Abgas mit einer selektiven katalytischen Reaktion reduziert. Die Stickoxide werden dabei mit Hilfe von flüssigem Reduktionsmittel, beispielsweise einer wässrigen Harnstofflösung, zu Stickstoff und Wasser reduziert.

Zum Speichern des flüssigen Reduktionsmittels kommen Reduktionsmittellanks zum Einsatz, die als Mehrbehälter-Systeme gestaltet sind. Dabei wird das Reduktionsmittel in einem Aktivtank als erstem Behälter und mindestens einem Passivtank als zweitem Behälter gespeichert. Zum Bereitstellen des Reduktionsmittels muss dieses unter anderem vom Passivtank in den Aktivtank umgeleitet bzw. umgepumpt werden. Dazu ist eine Leitung mit einem zugeordneten Absperrventil vorgesehen. Das Absperrventil wird relativ selten aktiviert, wodurch sich dort Kristalle von Reduktionsmittel ausbilden können, die zu einem Verklemmen des Absperrventils und damit zu einem unerwünschten Ausfall des zugehörigen Systems führen können.

Der Erfindung liegt die Aufgabe zugrunde, einen Reduktionsmittel-Tank und ein Verfahren zum Bereitstellen von Reduktionsmittel zu schaffen, bei dem die oben genannten Nachteile überwunden und insbesondere unter allen Umgebungsbedingungen und über die Lebensdauer des Reduktionsmittel-Tanks hinweg eine Reduktion von Stickoxiden im Abgas sichergestellt ist.

Die Aufgabe ist gemäß der Erfindung mit einem Reduktionsmittel-Tank nach Anspruch 1 und einem Verfahren nach Anspruch 2 gelöst.

Erfindungsgemäß ist ein Reduktionsmittel-Tank zum Bereitstellen von Reduktionsmittel an einer Abgasanlage geschaffen, der mit einem ersten Behälter zum Speichern von Reduktionsmittel, einem zweiten Behälter zum Speichern von Reduktionsmittel, einer Leitung zum Umströmen von Reduktionsmittel vom zweiten Behälter in den ersten Behälter und einem Absperrventil zum wahlweisen fluiddichten Verschließen der Leitung ausgestattet ist. Ferner ist bei dem erfindungsgemäßen Reduktionsmittel-Tank eine Diagnoseeinrichtung vorgesehen, mittels der eine nicht ordnungsgemäße Funktion des Absperrventils erkannt werden kann.

Im Gegensatz zu bekannten Systemen zum Bereitstellen von Reduktionsmittel an einer Abgasanlage, insbesondere einer Verbrennungskraft-Maschine eines Kraftfahrzeuges, wird erfindungsgemäß das nur selten aktivierte Absperrventil zum wahlweisen fluiddichten Verschließen der Leitung diagnostiziert, also hinsichtlich seiner Funktion überwacht. Es ist dadurch möglich, einen Funktionsfehler des Absperrventils, etwa einen Teil- oder Totalausfall, frühzeitig zu erkennen und entsprechend mittels einer Anzeigeeinrichtung oder dergleichen einem Benutzer des zum erfindungsgemäßen Reduktionsmittel-Tank gehörenden Kraftfahrzeuges anzuzeigen, dass Wartungsarbeiten erforderlich sind.

An einem erfindungsgemäßen Reduktionsmittel-Tank ist der Diagnoseeinrichtung eine Füllmengenmesseinrichtung beispielsweise für den ersten Behälter zugeordnet, mittels der die Füllmenge in dem ersten Behälter gemessen werden kann. Mit der Füllmengenmesseinrichtung kann jene Füllmenge gemessen werden, die durch das genannte Absperrventil in den ersten Behälter hineingefördert wird. Diese gemessene Füllmenge kann in einen Vergleich zu einer rechnerischen Füllmenge gesetzt werden, die sich z.B. aus der Öffnungsdauer des Absperrventils ergibt bzw. ergeben müsste. Das Messen der Füllmenge in dem ersten Behälter erfolgt bevorzugt ausgehend von einem besonderen Ereignis, nämlich beispielsweise einer Erstbefüllung oder ausgehend vom letzten Vorgang des Umströmens. Das besondere Ereignis stellt dann für die Berechnung der Füllmengenänderung eine Referenz dar, von der ausgegangen werden kann. Auf diese Referenz kann Bezug genommen werden, wenn mit der Füllmengenmesseinrichtung am ersten Behälter bereits ein einzelner davon abweichender Füllstand ermittelt wird. Die Differenz zwischen Referenzwert und gemessenem bzw. ermitteltem Füllstand lässt einen Rückschluss auf eine ordnungsgemäße oder nicht ordnungsgemäße Funktion des genannten Absperrventils zu. Differieren z.B. die Füllmengen in dem ersten Behälter vor und nach dem Vorgang des Umströmens überhaupt nicht, kann eindeutig auf einen Funktionsfehler des Absperrventils rückgeschlossen werden.

Es kann an einem erfindungsgemäßen Reduktionsmittel-Tank der Diagnoseeinrichtung eine Füllmengenmesseinrichtung für den zweiten Behälter zugeordnet sein, mittels der die Füllmenge in dem zweiten Behälter gemessen werden kann, wobei grundsätzlich analog zur oben genannten Ausführungsform vorgegangen wird. Ist auch am zweiten Behälter keine Füllmengendifferenz vor und nach dem Vorgang des Umströmens feststellbar, kann auf einen Funktionsfehler des Absperrventils und zugleich auf die Funktionstüchtigkeit des Überwachungssystems rückgeschlossen werden. Es werden dabei folgende vier Diagnosezustände ermittelt: Umfüllen am ersten Behälter erkannt und Umfüllen am zweiten Behälter erkannt bedeutet, dass das System in Ordnung ist; Umfüllen am ersten Behälter erkannt, Umfüllen am zweiten Behälter aber nicht erkannt bedeutet, dass die Diagnose nicht in Ordnung ist, Umfüllen am ersten Behälter nicht erkannt und Umfüllen am zweiten Behälter nicht erkannt bedeutet, dass das Absperrventil defekt ist; Umfüllen am ersten Behälter nicht erkannt und Umfüllen am zweiten Behälter wohl erkannt bedeutet, dass die Diagnose nicht in Ordnung ist.

Nach einer Ausführungsform ist der Diagnoseeinrichtung eine Zeitmesseinrichtung zugeordnet, mittels der die Zeitdauer des offen stehenden Absperrventils gemessen werden kann. Aus dieser Zeitdauer kann (bei grundsätzlich bekanntem Durchsatz durch die Leitung) eine Durchströmungsmenge pro Zeiteinheit durch die Leitung berechnet werden. Der aus dieser Durchströmungsmenge zu erwartende Füllstand in dem ersten Behälter wird mit dem tatsächlichen Füllstand verglichen und daraus kann auf eine fehlerhafte Funktion des Absperrventils rückgeschlossen werden.

Bei einer weiteren erfindungsgemäßen Ausführungsform ist der Diagnoseeinrichtung eine Füllmengenermittelungseinrichtung zugeordnet, mittels der eine in einem der Behälter zu erwartende Füllmenge errechnet werden kann. Die zu erwartende Füllmenge kann dann in der Diagnoseeinrichtung mit dem tatsächlich erbrachten Wert verglichen und daraus kann auf eine fehlerhafte Funktion des Absperrventils rückgeschlossen werden.

In Entsprechung zum oben genannten System sind bei einem erfindungsgemäßen Verfahren zum Bereitstellen von Reduktionsmittel an einer Abgasanlage die entsprechenden Verfahrensschritte vorgesehen, so wie dies im zweiten Patentanspruch angegeben ist.

Nachfolgend wird ein Ausführungsbeispiel der erfindungsgemäßen Lösung anhand der beigefügten schematischen Zeichnung näher erläutert. Es zeigt:
Die Fig. eine stark schematische Prinzipskizze eines Ausführungsbeispiels eines erfindungsgemäßen Reduktionsmittel-Tanks nebst Abgasanlage und Verbrennungskraft-Maschine.

Die Fig. zeigt einen Reduktionsmittel-Tank 10 zum Bereitstellen von Reduktionsmittel, der als wesentliche Komponenten einen ersten Behälter 12 und einen zweiten Behälter 14 umfasst. Der erste Behälter 12 wird auch als "Ansaugbehälter" oder "Aktivbehälter" bezeichnet und dient als jener Speicher von Reduktionsmittel, aus dem unter allen Umweltbedingungen (insbesondere auch bei Frost) Reduktionsmittel entnommen werden kann. Der zweite Behälter 14 wird auch als "Speicherbehälter" oder "Passivbehälter" bezeichnet und dient lediglich zum Speichern von "zusätzlichem" Reduktionsmittel.

Zwischen den Behältern 12 und 14 ist eine Leitung 16 angeordnet, der ein Absperrventil 18 zuzuordnen ist. Dieses Absperrventil 18 hat die Funktion, ein Umströmen von Reduktionsmittel vom zweiten Behälter 14 in den ersten Behälter 12 wahlweise abzusperren.

Des Weiteren ist eine Ansaugleitung 20 vorgesehen, durch die hindurch mit einer Pumpe 22 Reduktionsmittel angesaugt und weiter gefördert werden kann. Die Pumpe 22 dient dabei zum Pumpen von Reduktionsmittel von dem ersten Behälter 12 zu einem Dosiermodul 24. Die Aufgabe des Dosiermoduls 24 liegt darin, Reduktionsmittel in die zugehörige Abgasanlage 26 einzuspritzen, damit dieses dort die eingangs bereits genannte Reduktionswirkung entfaltet. Der Abgasanlage 26 wird dazu von einer Verbrennungskraft-Maschine 28 Abgas zugeführt. Im Abgas befinden sich jene Stickoxide, die mit Hilfe des Reduktionsmittels, welches vorliegend eine wässrige Harnstofflösung ist, zu Stickstoff und Wasser gewandelt werden.

Von der Ansaugleitung 20 zweigt in Strömungsrichtung hinter der Pumpe 22 eine Rücklaufleitung 30 ab. Dabei ist die Pumpe 22 dazu eingerichtet, dass sie aus dem Behälter 12 nicht nur das zum Einspritzen im Dosiermodul 24 erforderliche Reduktionsmittel ansaugt, sondern auch überschüssiges Reduktionsmittel. Durch die Rücklaufleitung 30 wird solch überschüssiges Reduktionsmittel wieder in den ersten Behälter 12 zurückgeführt. In der Rücklaufleitung 30 ist dabei eine Blende 32 eingesetzt, die die durch die Rücklaufleitung 30 geförderte Menge an Reduktionsmittel begrenzt und dadurch den am Dosiermodul 24 vorherrschenden Druck des Reduktionsmittels definiert.

Weiterhin ist das Absperrventil 18 mit einer Diagnoseeinrichtung 34 gekoppelt. Die Diagnoseeinrichtung 34 dient dazu, eine nicht ordnungsgemäße Funktion des Absperrventils 18 zu erkennen. Dies geschieht zum Einen, indem innerhalb der Diagnoseeinrichtung 34 eine Zeitmesseinrichtung 36 angeordnet ist. Die Zeitmesseinrichtung 36 ist mit dem Absperrventil 18 gekoppelt und misst die Zeitdauer des offen stehenden Absperrventils 18. Aus dieser Zeitdauer kann für den einzelnen Öffnungsvorgang des Absperrventils die sich ergebende Durchströmungsmenge durch die Leitung berechnet werden. Der aus dieser Durchströmungsmenge zu erwartende Füllstand in dem ersten Behälter 12 wird mit dem tatsächlichen Füllstand anschließend verglichen und daraus kann auf eine fehlerhafte Funktion des Absperrventils rückgeschlossen werden.

Weiterhin ist der Diagnoseeinrichtung 34 eine Füllmengenermittelungseinrichtung 38 zugeordnet. Die Füllmengenermittelungseinrichtung 38 ist mit einer Füllmengenmesseinrichtung 40 am ersten Behälter 12, sowie mit einer Füllmengenmesseinrichtung 42 am zweiten Behälter 14 gekoppelt. Mit diesen Füllmengenmesseinrichtungen 40 und 42, in Gestalt von Füllmengen- bzw. Füllstandssensoren ausgebildet sind, werden die Füllstände in den Behältern 12 und 14 gemessen. Dieses Messen geschieht insbesondere ausgehend von einem besonderen Ereignis, nämlich der Erstbefüllung oder ausgehend vom letzten Vorgang des Umströmens. Aus diesen Füllmengen wird, wie oben erläutert, eine Diagnose über eine ordnungsgemäße Funktion des Absperrventils 18 getroffen.

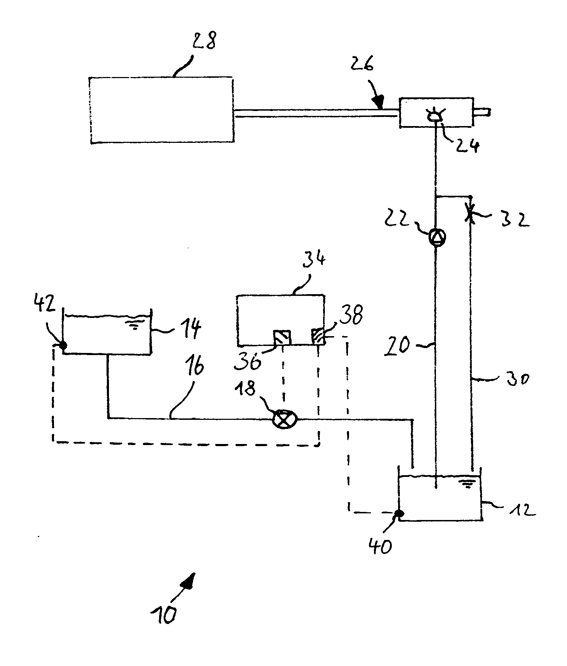

## Patentansprüche

1. Reduktionsmittel-Tank (10) zum Bereitstellen von Reduktionsmittel an einer Abgasanlage (26) mit einem ersten Behälter (12) zum Speichern von Reduktionsmittel, einem zweiten Behälter (14) zum Speichern von Reduktionsmittel, einer Leitung (16) zum Umströmen von Reduktionsmittel vom zweiten Behälter (14) in den ersten Behälter (12) und einem Absperrventil (18) zum wahlweisen fluiddichten Verschließen der Leitung (16), **dadurch gekennzeichnet, dass** eine Diagnoseeinrichtung (34) vorgesehen ist, mittels der eine nicht ordnungsgemäße Funktion des Absperrventils (18) erkannt werden kann, wobei der Diagnoseeinrichtung (34) eine Füllmengenmesseinrichtung (40) für zumindest einen der beiden Behälter (12, 14) zugeordnet ist und eine Zeitmesseinrichtung (36) und/oder eine Füllmengenermittelungseinrichtung (38) zugeordnet ist, wobei mittels der Füllmengenermittelungseinrichtung (38) eine in einem der Behälter (12, 14) zu erwartende Füllmenge errechnet werden kann, während mittels der Zeitmesseinrichtung (36) die Zeitdauer des offen stehenden Absperrventils (18) gemessen und aus dieser bei grundsätzlich bekanntem Durchsatz durch die Leitung (16) eine Durchströmungsmenge pro Zeiteinheit durch die Leitung (16) berechnet werden kann.

2. Verfahren zum Bereitstellen von Reduktionsmittel an einer Abgasanlage (26) mit den Schritten: Speichern von Reduktionsmittel in einem ersten Behälter (12), Speichern von Reduktionsmittel in einem zweiten Behälter (14), Umströmen von Reduktionsmittel vom zweiten Behälter (14) in den ersten Behälter (12) mittels einer Leitung (16) und Absperren der Leitung (16) mittels eines Absperrventils (18), **dadurch gekennzeichnet, dass** die Funktion des Absperrventils (18) diagnostiziert wird, indem die Füllmenge in zumindest einem der Behälter gemessen wird, und die Zeitdauer des offen stehenden Absperrventils (18) gemessen wird und aus dieser bei grundsätzlich bekanntem Durchsatz durch die Leitung (16) eine Durchströmungsmenge pro Zeiteinheit durch die Leitung (16) berechnet wird und/oder wobei eine in einem der Behälter (12, 14) zu erwartende Füllmenge errechnet wird.

## Claims

1. A reducing agent tank (10) for providing reducing agent to an exhaust gas system (26) with a first container (12) for storing reducing agent, a second container (14) for storing reducing agent, a line (16) for recirculating reducing agent from the second container (14) into the first container (12) and a check valve (18) for selectively closing the line (16) in a fluid-tight manner, **characterised in that** a diagnostic device (34) is provided, by means of which incorrect functioning of the check valve (18) can be recognised, wherein the diagnostic device (34) is allocated a filling quantity measuring device (40) for at least one of the two containers (12, 14) and a time measuring device (36) and/or a filling quantity determining device (38), wherein a filling quantity to be expected in one of the containers (12, 14) can be calculated by means of the filling quantity determining device (38), while the time period of the open check valve (18) can be measured by means of the time measuring device (36) and from this, with the throughput through the line (16) basically being known, a throughflow quantity per time unit through the line (16) can be calculated.

2. A method for providing reducing agent to an exhaust gas system (26), comprising the steps: storing reducing agent in a first container (12), storing reducing agent in a second container (14), recirculating reducing agent from the second container (14) into the first container (12) by means of a line (16) and shutting off the line (16) by means of a check valve (18), **characterised in that** the functioning of the check valve (18) is diagnosed **in that** the filling quantity in at least one of the containers is measured, and the time period of the open check valve (18) is measured and from this, with the throughout through the line (16) basically being known, a throughflow quantity per time unit through the line (16) is calculated and/or wherein a filling quantity to be expected in one of the containers (12, 14) is calculated.

## Revendications

1. Réservoir d'agent réducteur (10) pour fournir de l'agent réducteur à une installation de gaz d'échappement (26) comprenant un premier réservoir (12) pour de l'agent réducteur, un second réservoir (14) pour de l'agent réducteur, une conduite (16) pour faire passer de l'agent réducteur du second réservoir (14) dans le premier réservoir (12) et une vanne d'arrêt (18) pour fermer sélectivement la conduite (16) de manière étanche,
réservoir **caractérisé par**
- une installation de diagnostic (34) pour détecter un mauvais fonctionnement de la vanne d'arrêt (18),
* l'installation de diagnostic (34) comportant une installation de mesure de niveau (40) d'au moins l'un des deux réservoirs (12, 14) et une installation de mesure de temps (36) et/ou une installation de détermination de niveau (38),
* l'installation de détermination de niveau (38) calculant le niveau de remplissage prévisible de l'un des réservoirs (12, 14) alors que l'installation de mesure de temps (36) mesure le temps pendant lequel la vanne d'arrêt (18) était ouverte et à partir du débit à travers la conduite (16), connu en principe, elle calcule un débit par unité de temps dans la conduite (16).

2. Procédé d'alimentation en agent réducteur d'une installation de gaz d'échappement (26) comprenant les étapes suivantes :
- stocker de l'agent réducteur dans un premier réservoir (12),
- stocker de l'agent réducteur dans un second réservoir (14),
- faire passer l'agent réducteur du second réservoir (14) dans le premier réservoir (12) par une conduite (16) et couper la conduite (16) à l'aide d'une vanne d'arrêt (18),
procédé **caractérisé en ce qu'**
on diagnostique le fonctionnement de la vanne d'arrêt (18) en mesurant le niveau de remplissage d'au moins l'un des réservoirs, et
on mesure la durée d'ouverture de la vanne d'arrêt (18) et à partir du débit connu en principe dans la conduite (16), on calcule un débit par unité de temps dans la conduite (16) et/ou on calcule le niveau de remplissage prévisible de l'un des réservoirs (12, 14).
